# EUROPEAN PATENT SPECIFICATION

(11) **EP 2 374 700 B1**
(45) Date of publication and mention of the grant of the patent: **27.03.2013**
(21) Application number: 11161467.3
(22) Date of filing: 07.04.2011
(51) Int. Cl.: B62J 17/04

(54) **Windshield attaching structure of vehicle**
Windschutzscheibenbefestigungsstruktur für ein Fahrzeug
Structure de fixation de pare-brise de véhicule

(30) Priority: 09.04.2010 JP 2010090668
(43) Date of publication of application: 12.10.2011
(73) Proprietor: KAWASAKI JUKOGYO KABUSHIKI KAISHA, Kobe shi, Hyogo 650-8670 (JP)
(72) Inventor: Nishiyama, Takashi, Hyogo 673-8666 (JP); Egami, Kouichi, Hyogo 673-8666 (JP)
(74) Representative: HOFFMANN EITLE

(56) References cited:
- EP-A1- 0 685 385
- EP-A1- 2 088 066
- DE-A1- 3 609 595
- JP-A- 3 065 483
- JP-A- 2002 087 355
- JP-A- 2010 070 108

## Description

### BACKGROUND OF THE INVENTION

### 1. Field of the Invention

The present invention relates to a windshield attaching structure of a vehicle such as a motorcycle.

### 2. Description of the Related Art

A conventional windshield attached to the upper portion of a front cowl which covers the front portion of the vehicle body of a motorcycle can change its inclination angle in some cases. For instance, Japanese Utility Model Application Laid-Open (JP-U) No. 3040432 (Patent Document D1) discloses a configuration in which a holding member is provided to a windshield and is moved back and forth along a rail to manually change the inclination angle of the windshield.

DE 36 09 595 A1 relates to a windshield for the front portion of a motorcycle, wherein the windshield is adapted to be tilted. This document discloses a windshield according to the preamble of independent claim 1.

JP 2010 070108 A, EP 2 088 066 A1, JP 2002 087355 A, EP 0 685 385 A1, and JP 3 065483 A relate to further windshield structures.

### SUMMARY OF THE INVENTION

However, in the windshield attaching structure in Patent Document 1, the portion which holds the inclination angle of the windshield is exposed from the center in the width direction of the vehicle body, with the result that the holding portion and the forward-arranged member (cover member or the like) of the motorcycle can complicate the front portion of the vehicle body of the motorcycle.

Accordingly, an object of the present invention is to provide a windshield attaching structure which can change the inclination angle of a windshield to simplify the front portion of a vehicle body so that appearance can be improved.

This object is solved with a windshield attaching structure of a windshield as defined in independent claim 1. Advantageous embodiments are recited in the dependent claims.
The present invention provides a windshield attaching structure of a windshield which is provided in the upper portion of the front portion of the vehicle body of a vehicle and reduces wind pressure to a driver, including a shield stay to which the windshield is attached, a rotation support shaft which supports the shield stay so as to be angle-shifted to a frame of the vehicle and a lock unit which can change the shield stay between a locked state in which the shield stay is locked in any one of a plurality of angle shift positions and an unlocked state in which the shield stay is not locked in any of the angle shift positions, wherein at least part of the lock unit is covered by a forward-arranged member arranged in the front portion of the vehicle.

According to the above configuration, the windshield can be angle-shifted about the rotation support shaft together with the shield stay in the unlocked state. Therefore, the shield stay is changed from the locked state to the unlocked state, so that the driver can change the inclination angle of the windshield by gripping the windshield and can easily change the windshield to a desired inclination angle. In addition, in the state that the inclination angle of the windshield is changed, the shield stay is changed from the unlocked state to the locked state, so that the changed inclined state of the windshield can be maintained. Further, in the present invention, at least part of the lock unit is covered by the forward-arranged member. When the driver riding in the vehicle sees the front, at least part of the lock unit is covered by the forward-arranged member to simplify the front portion of the vehicle body so that appearance can be improved. The forward-arranged member may be realized by, e.g., a meter cover, a front cowl, and a meter body.

Furthermore, the present invention preferably includes the following configurations.
(1) The lock unit has an operating portion which is manually operated to change the shield stay between the locked state and the unlocked state, wherein the operating portion is arranged in the position apart from an engaging portion of the shield stay engaged by the lock unit so as to be exposed from the forward-arranged member.
(2) In the configuration (1), the shield stay further has a supporting portion supported by the rotation support shaft and a shield attaching portion fixed to the windshield, wherein the supporting portion is arranged toward the shield attaching portion from the engaging portion.
(3) In the configuration (2), the lock unit locks the engaging portion rearward of the supporting portion.
(4) In the configuration (2) or (3), the lock unit locks the engaging portion downward of the supporting portion.
(5) The front portion of the lock unit and the rotation support shaft are covered by the forward-arranged member.
(6) In any one of the configurations (2) to (4), a plurality of shield attaching portions are provided so as to be spaced from each other in the front and rear direction, wherein the supporting portion is arranged near the forwardmost shield attaching portion.
(7) In configurations according to the invention, a pair of right and left shield stays are provided, wherein each of the shield stays has the engaging portion and the supporting portion, and wherein the distance in the right and left direction between the right and left engaging portions is set to be larger than the distance in the right and left direction between the right and left supporting portions.
(8) In any one of the configurations (2) to (4), (6), and (7), the engaging portion has a plurality of teeth for angle shift positioning, wherein the lock unit has a projecting portion which can be shifted between a locked position and an unlocked position, wherein the projecting portion is shifted into the locked position so as to be engaged with one of recess portions formed by the teeth of the engaging portion so that the lock unit locks the shield stay into the predetermined angle shift position, and wherein the projecting portion is shifted into the unlocked position to disengage the projecting portion and the engaging portion from each other so that the lock unit unlocks the shield stay.
(9) In the configuration (8), the lock unit has an urging unit which urges the projecting portion in the direction engaging the engaging portion, and an operating lever which releases the urging against the urging unit.

According to the configuration (1), the operating portion of the lock unit is operated by the driver. The shield stay can be changed between the locked state and the unlocked state. In addition, the operating portion is arranged in the position apart from the engaging portion of the shield stay engaged by the lock unit so as to be exposed from the forward-arranged member. The operating portion can be arranged in the position in which the operating portion can be easily operated by the driver. Even when the engaging portion of the shield stay is arranged in the position in which the engaging portion is difficult to be reached by the driver, the operability of the operating portion can be prevented from being deteriorated. Further, the engaging portion can be arranged in an arbitrary position without considering the operability of the driver. The engaging portion can be easily provided in the position in which the engaging portion is covered by the forward-arranged member. In this way, while part of the lock unit (such as engaging portion) is arranged in the position in which part of the lock unit is covered by the forward-arranged member, the operability of the operating portion of the lock unit can be prevented from being deteriorated.

According to the configuration (2), the supporting portion is arranged toward the shield attaching portion from the engaging portion. The lock unit can be prevented from being located on the track of the angle shift of the shield stay with the supporting portion as a pivot, so that the interference between the lock unit and the shield stay can be prevented. In addition, as compared with when the shield stay is engaged near the supporting portion, the shield stay is engaged apart from the supporting portion. The moment force for engaging the shield stay can be larger to increase the engaging force of the lock unit.

According to the configuration (3), the lock unit is arranged so as to engage the engaging portion rearward of the supporting portion. Most of the lock unit can be easily arranged rearward of the rotation support shaft. The outer shape of the vehicle is typically increased in at least one of the vehicle width direction and the up and down direction rearward from the front end of the windshield. Therefore, the accommodating space becomes larger rearward in the region near the windshield. In the present invention, as described above, most of the lock unit is arranged rearward of the rotation support shaft. As compared with when the lock unit is arranged forward of the rotation support shaft, the lock unit can be arranged in the region in which the accommodating space is relatively large. The lock unit can be easily arranged so as to prevent the interference between the lock unit and other components, so that the degree of freedom of the design can be improved.

According to the configuration (4), the lock unit is arranged so as to engage the engaging portion downward of the supporting portion. Most of the lock unit can be easily arranged downward of the rotation support shaft. In this way, the lock unit is arranged downward of the rotation support shaft, so that part of the lock unit can be easily covered by the forward-arranged member to improve appearance.

According to the configuration (5), the front portion of the lock unit and the rotation support shaft are covered by the forward-arranged member. The front portion of the lock unit and the rotation support shaft can be prevented from being exposed outward to improve appearance.

According to the configuration (6), the supporting portion is arranged near each of a pair of forwardmost shield attaching portions. The angle shift of the shield stay with the supporting portion as a pivot cannot be inhibited by the shield attaching portion.

According to the configuration of the invention, the shield stays are supported by two right and left supporting portions, and are engaged with two right and left engaging portions by the lock unit. The shield stays can be stably supported. In addition, the distance between the engaging portions is larger than the distance between the supporting portions. The shield stays can be stably engaged.

According to the configuration (8), the lock and the unlock of each of the shield stays are enabled only by shifting the projecting portion between the locked position and the unlocked position. The configuration in which the lock unit locks the shield stay at a predetermined angle can be easily provided.

According to the configuration (9), the lock unit has the urging unit which urges the projecting portion in the direction engaging the engaging portion, and an operating lever for releasing the urging against the urging unit. The unlock of the shield stay without operating the lever can be prevented. In addition, when the lever is not operated by the urging unit, the projecting portion can be held so as to engage the engaging portion.

In short, according to the present invention, the windshield attaching structure which can change the inclination angle of the windshield to simplify the front portion of the vehicle body so that appearance can be improved can be provided.

### BRIEF DESCRIPTION OF THE DRAWINGS

Fig. 1 is a left side view of a motorcycle having a windshield attaching structure according to a first embodiment of the present invention;
Fig. 2 is an enlarged view of the upper portion in the front portion of the motorcycle of Fig. 1;
Fig. 3 is a diagram of the motorcycle seen from a driver;
Fig. 4 is a perspective view of a meter cover portion from which a windshield is removed;
Fig. 5 is an enlarged left side view of the windshield portion;
Fig. 6 is a rear perspective view of the windshield attaching structure from which the windshield is detached;
Fig. 7 is a front view of the windshield attaching structure of Fig. 6;
Fig. 8 is a rear view of the windshield attaching structure of Fig. 6;
Fig. 9 is a rear perspective view of the windshield attaching structure according to a second embodiment of the present invention;
Fig. 10 is a partially rear view of Fig. 9;
Fig. 11 is a partially rear perspective view of Fig. 9;
Fig. 12 is a front perspective view of the windshield attaching structure according to a third embodiment of the present invention;
Fig. 13 is a left side view of Fig. 12;
Fig. 14 is a front perspective view of the windshield attaching structure according to a fourth embodiment of the present invention;
Fig. 15 is a lower perspective view of a gripping member 92 portion of Fig.14;
Fig. 16 is a diagram showing the gripping member 92 of Fig. 15 from which a cover 923 is detached;
Fig. 17 is a schematic diagram of the gripping member 92 of Fig. 15 in the state that a pulley member 925 is removed, viewed in the direction of an arrow XVII;
Fig. 18 is a diagram showing the state that an eccentric member 926 of Fig. 17 is rotated about a pivot 925a; and
Fig. 19 is a perspective view of a gripping portion 921.

### DETAILED DESCRIPTION OF THE INVENTION

### (First embodiment)

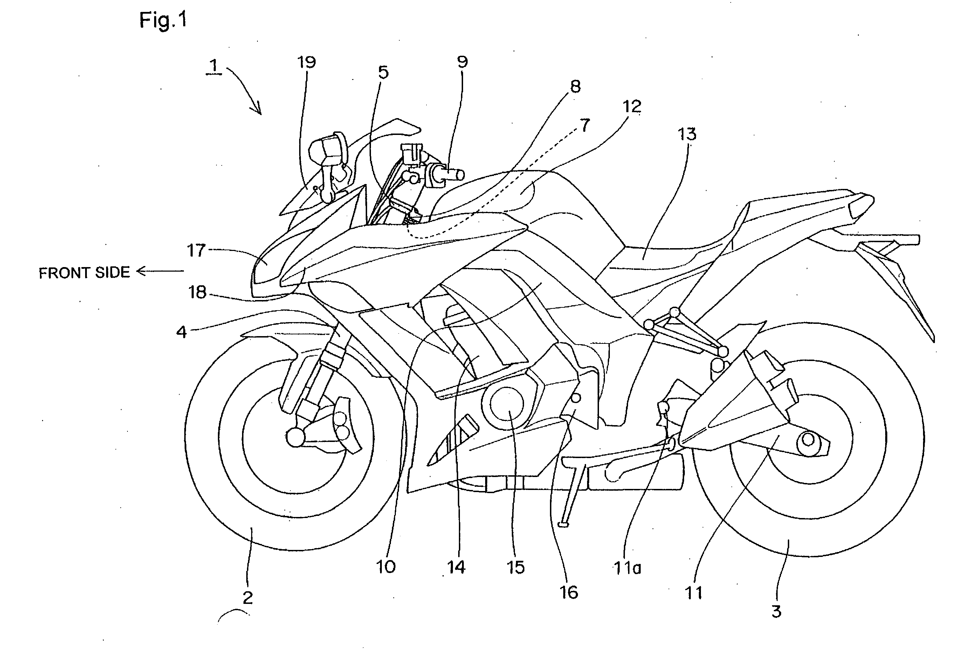

Fig. 1 is a left side view of a motorcycle 1 having a windshield attaching structure according to a first embodiment of the present invention. Further, the direction concept used in this embodiment coincides with the direction concept seen from the driver of the motorcycle 1.

As shown in Fig. 1, the motorcycle 1 has a front wheel 2 and a rear wheel 3, and the front wheel 2 is rotatably supported in the lower portion of a front fork 4 extended in the substantially up and down direction. The front fork 4 is supported by a steering shaft 7 via an upper bracket 5 provided at its upper end and an under bracket (not shown) provided downward of the upper bracket 5. The steering shaft 7 is rotatably supported by a head pipe 8. A bar type steering wheel 9 extended to right and left is attached to the upper bracket 5. Therefore, the driver swings the steering wheel 9 to right and left, so that the front wheel 2 is steered with the steering shaft 7 as a rotational shaft.

A vehicle body frame 10 is extended rearward from the head pipe 8. A front end 11a of a swing arm 11 is axially supported at the rear lower end of the vehicle body frame 10. The rear wheel 3 is rotatably supported at the rear end of the swing arm 11. A fuel tank 12 is arranged upward of the vehicle body frame 10 and rearward of the steering wheel 9. A driver's seat 13 is arranged rearward of the fuel tank 12. An engine 14 is mounted substantially immediately below the fuel tank 12. A gear case 16 is arranged in the rear portion of a crankcase 15 of the engine 14, so that the power of the gear is transmitted to the rear wheel 3 via a chain (not shown).

A head lamp 17 is arranged forward of the steering wheel 9, and is covered by a front cowl 18. The front cowl 18 is of a full cowl type in which its upper portion covers the head lamp 17 and its lower portion covers the engine 14 and the crankcase 15.

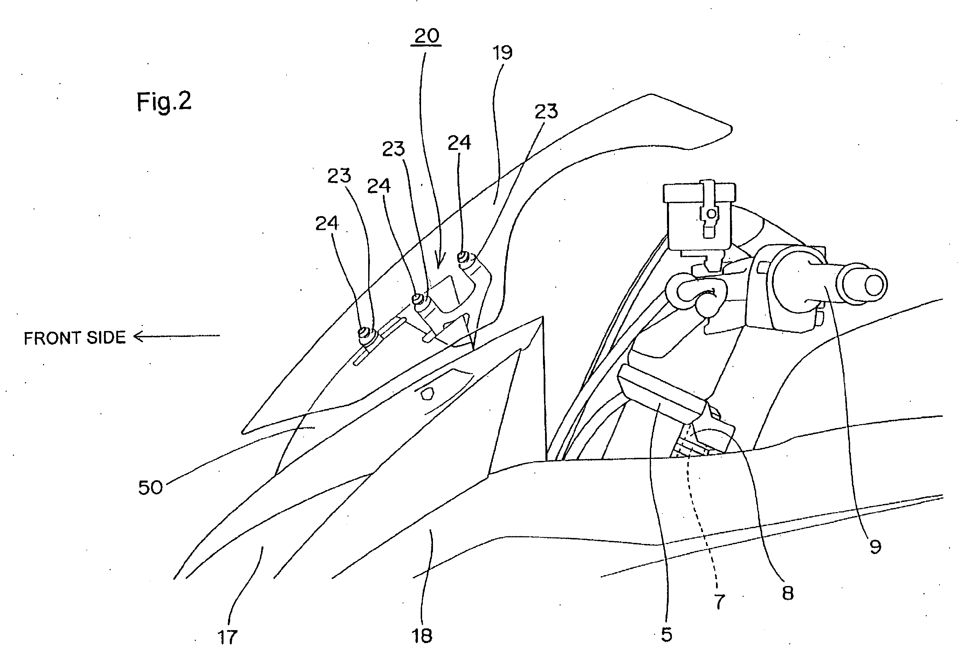

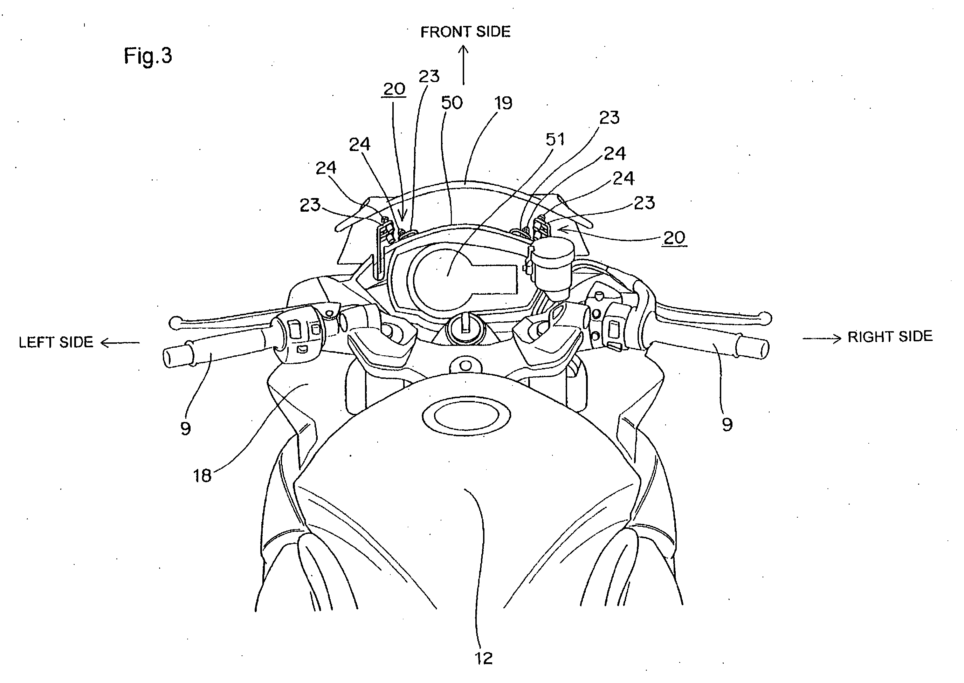

Fig. 2 is an enlarged view of the upper portion in the front portion of the motorcycle 1 of Fig. 1. Fig. 3 is a diagram of the motorcycle 1 seen from the driver. As shown in Figs. 2 and 3, a meter body 51 having a display panel which displays the vehicle speed of the motorcycle 1 is arranged in the upper portion of the front cowl 18, and a meter cover 50 covers the upper portion in the front portion of the meter body 51. In addition, the meter cover 50 configures part of the upper surface of the front cowl 18. A windshield 19 which reduces wind pressure to the driver is arranged in the upper portion of the front cowl 18 and the meter cover 50.

The windshield 19 is curved so as to have a convex shape forward, and is formed of a transparent resin plate to secure the forward visibility of the driver.

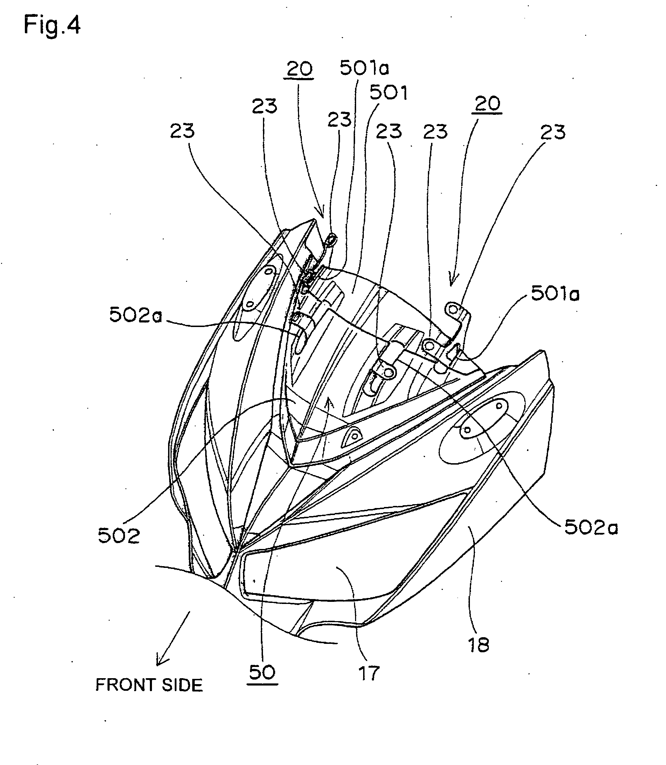

Fig. 4 is a perspective view of the meter cover 50 portion from which the windshield 19 is removed. As shown in Fig. 4, the meter cover 50 is formed so as to be separated into a rear cover 501 and a front cover 502 coupled to the rear cover 501 and arranged forward of the rear cover 501. A pair of right and left throughholes 501a extended in the front and rear direction and formed so that the rear ends thereof reach the rear end of the rear cover 501 are formed in the rear cover 501. Likewise, a pair of right and left throughholes 502a extended in the front and rear direction and formed so that the rear ends thereof reach the rear end of the front cover 502 are formed in the front cover 502. Thereby, the upper portions of shield stays 20 are inserted forward from the rear ends of the rear cover 501 and the front cover 502, so that the upper portions of the shield stays 20 can be attached so as to pass through the rear cover 501 and the front cover 502 upward. As compared with when the upper portions of the shield stays 20 are attached so as to pass through the throughholes 501a of the rear cover 501 and the throughholes 502a of the front cover 502 upward from the lower side, the length in the right and left direction of the throughholes 501a and 502a can be reduced.

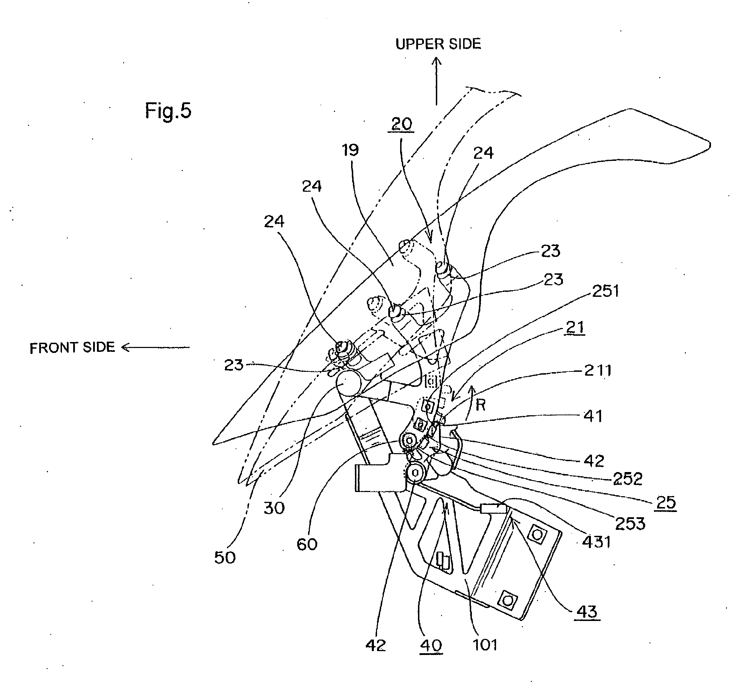

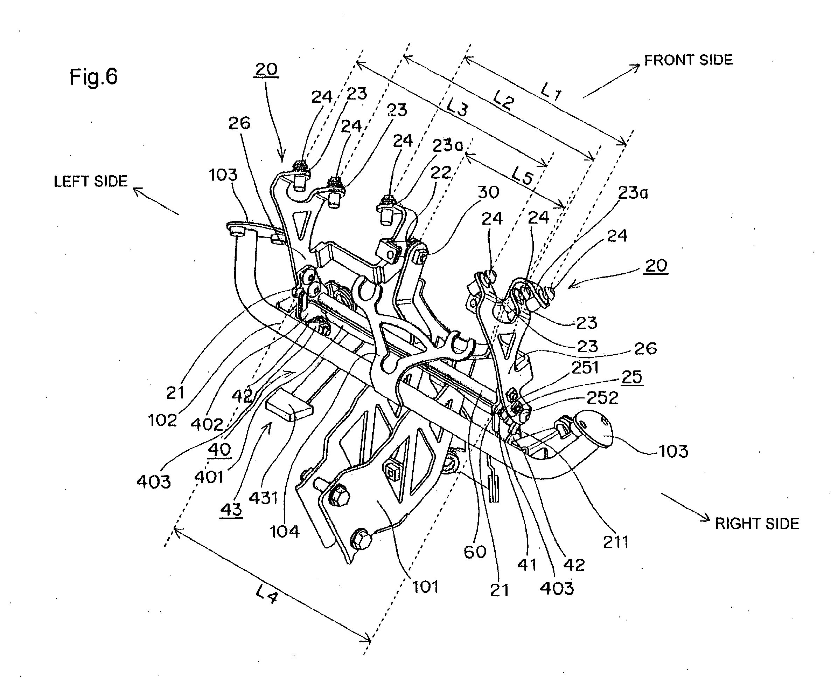

Fig. 5 is an enlarged left side view of the windshield 19 portion from which the front cowl 18, the meter cover 50, the meter body 51 and the like are removed. Fig. 6 is a rear perspective view of the windshield attaching structure from which the windshield 19 is detached. As shown in Figs. 5 and 6, the windshield 19 is attached to a pair of right and left shield stays 20. The pair of right and left shield stays 20 are coupled by a coupling member 60 extended in the right and left direction. The coupling member 60 couples the outermost portions in the right and left direction of the shield stays 20. The shield stays 20 are attached to right and left rotation support shafts 30 located at the ends of a center stay 101. The center stay 101 is bolted and fixed onto the head pipe 8 formed at the front end of the vehicle body frame 10. A lock unit 40 is provided downward and rearward of the shield stays 20, so that the shield stays 20 can be locked in a plurality of angle shift positions.

The rotation support shafts 30 have axes extended in the horizontal direction and support the shield stays 20 so that the shield stays 20 can be angle-shifted about the axes. Therefore, in the state that the lock unit 40 is unlocked, the shield stays 20 and the windshield 19 can be angle-shifted about the axes of the rotation support shafts 30.

An upper pipe 102 extended in the right and left direction is attached to the center stay 101. Mirror brackets 103 for attaching rear-view mirrors are attached to the right and left ends of the upper pipe 102. A meter stay 104 to which the meter body 51 is attached is welded and fixed to the center portion in the right and left direction of the upper pipe 102.

The lock unit 40 is located downward of the meter stay 104. As apparent from Figs. 2 to 5, the meter cover 50 which covers the meter body 51 attached to the meter stay 104 covers the rotation support shafts 30 and the upper portion and the front portion of the lock unit 40. Later-described shield attaching portions 23 are projected upward from the upper surface of the meter cover 50. The windshield 19 is attached to the shield attaching portions 23.

Hereinafter, the configurations of the shield stays 20 and the lock unit 40 will be described in more detail.

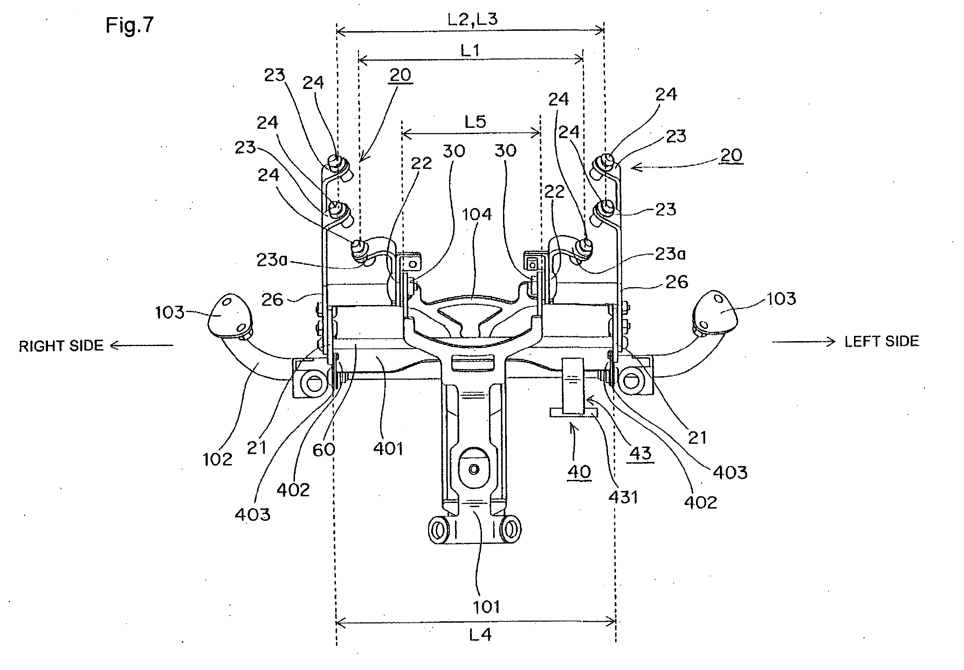

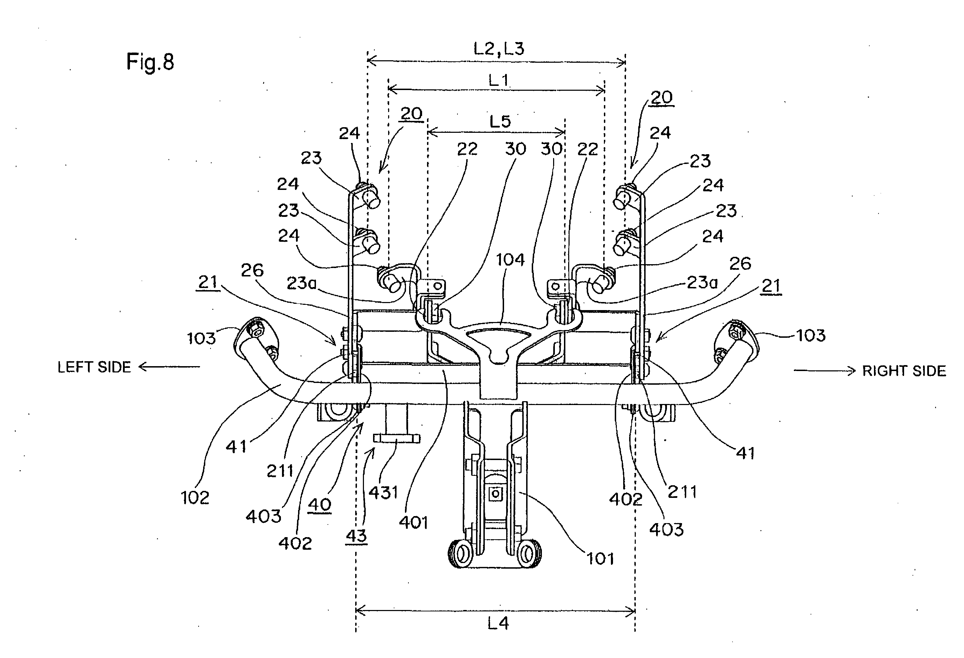

As shown in Fig. 6, the shield stays 20 have engaging portions 21, supporting portions 22, and the shield attaching portions 23, respectively. In the engaging portions 21, the lock unit 40 locks the shield stays 20 at a predetermined angle. The supporting portions 22 are supported so as to be angle-shifted by the rotation support shafts 30 about the axes of the rotation support shafts 30. The shield stays 20 can be angle-shifted about the rotation support shafts 30 with respect to the center stay 101, that is, the vehicle body frame 10. The engaging portions 21 are portions engaged by the abutment of part of the lock unit 40. The lock unit 40 is abutted onto the engaging portions 21, so that the shield stays 20 are brought into a locked state in which the angle shift about the axes of the rotation support shafts 30 is inhibited. In addition, the abutment of the lock unit 40 onto the engaging portions 21 is released, so that the shield stays 20 are brought into an unlocked state in which the angle shift is allowed. In this way, part of the lock unit 40 is changed between the state that part of the lock unit 40 is abutted onto the engaging portions 21 and the state that part of the lock unit 40 is not abutted onto the engaging portions 21, so that the shield stays 20 can be changed between the locked state in which the shield stays 20 are locked at the predetermined angle and the unlocked state. Screws 24 can be attached to the shield attaching portions 23. The windshield 19 and the shield attaching portions 23 are fastened by the screws 24 from the front surface side of the windshield 19, so that the windshield 19 is attached to the shield stays 20. A plurality of pairs of right and left shield attaching portions 23 are provided according to the pair of right and left shield stays 20, and are provided so as to be spaced from each other in the front and rear direction. For instance, in Fig. 6, three pairs of shield attaching portions 23 are provided. Fig. 7 is a front view of the windshield attaching structure of Fig. 6. Fig. 8 is a rear view of the windshield attaching structure of Fig. 6. The supporting portions 22 are arranged near a pair of forwardmost shield attaching portions 23a. An interval L1 in the right and left direction of the pair of forwardmost shield attaching portions 23a is shorter than an interval L2 in the right and left direction of the pair of middle shield attaching portions 23 and an interval L3 in the right and left direction of the pair of rear shield attaching portions 23. The engaging portions 21 are provided rearward of the supporting portions 22 and downward of the supporting portions 22.

In the side view of the motorcycle 1, that is, in the state that the motorcycle 1 is projected onto a plane vertical to the axes of the rotation support shafts 30, the supporting portions 22 are arranged toward the shield attaching portions 23 from the engaging portions 21. In this embodiment, the supporting portions 22 are arranged toward the forwardmost shield attaching portions 23a. Thereby, the lock unit 40 abutted onto the engaging portions 21 are not located on the track of the angle shift of the shield stays 20 with the supporting portions 22 as pivots.

In the shield stays 20, the supporting portions 22 are formed so as to be extended inward in the right and left direction and rearward and downward from the forwardmost shield attaching portions 23a, and branching portions 26 are formed so as to be extended rearward and outward in the right and left direction from the supporting portions 22 and branched in the up and down direction. In the shield stays 20, the engaging portions 21 are provided in the position in which the engaging portions 21 are extended downward from the branching portions 26, and the remaining shield attaching portions 23 are provided in the position in which the remaining shield attaching portions 23 are extended upward from the branching portions 26. The shield stays 20 may be configured by joining a plurality of element members. For instance, first element members having the forwardmost shield attaching portions 23a and the supporting portions 22 and second element members having the engaging portions 21 and the remaining shield attaching portions 23 may be welded so as to be configured as the shield stays 20 as a whole. Further, the second element members may be configured by fastening the engaging portions 21 and the remaining shield attaching portions 23.

By the above configuration, an interval L4 in the right and left direction of the pair of engaging portions 21 is formed so as to be larger than an interval L5 in the right and left direction of the pair of supporting portions 22. In addition, the pair of engaging portions 21 are arranged in the outermost side portions of the right and left shield stays 20 with respect to the right and left direction. Further, the pair of supporting portions 22 are arranged in the innermost side portions of the right and left shield stays 20 with respect to the right and left direction. The coupling member 60 which is extended in the right and left direction and couples the pair of engaging portions 21 is provided, so that the strength of the engaging portions 21 can be improved.

As shown in Figs. 5 and 6, the engaging portions 21 have a pair of right and left plural teeth 211 engaged by projecting portions 41 of the lock unit 40. The plural teeth 211 are provided so that the shield stays 20 can be fixed in the plurality of angle shift positions. The projecting portions 41 of the lock unit 40 are located in a locked position in which the projecting portions 41 are engaged with recess portions 25 between the teeth 211 so as to hold the shield stays 20 in the predetermined angle shift position. In addition, when the projecting portions 41 of the lock unit 40 are moved into an unlocked position rearward of the recess portions 25, the recess portions 25 and the projecting portions 41 are disengaged to enable the angle shift of the shield stays 20. The plurality of teeth 211 are formed at the substantially rear ends of the shield stays 20, so that the projecting portions 41 of the lock unit 40 are located rearward of the shield stays 20. The plurality of teeth 211 are formed so as to be arranged side by side in the substantially up and down direction. Regardless of the inclination angle of the shield stays 20, the distances in which the projecting portions 41 are moved between the locked position and the unlocked position are substantially constant, so that the operability of the lock unit 40 can be improved. In this embodiment, four teeth 211 are provided on each of the right and left sides, and the projecting portions 41 of the lock unit 40 are engaged with the recess portions 25 (three on each of the right and left sides) formed by the teeth 211, so that the shield stays 20 can be located in three angle shift positions. When the position of each of the recess portions 25 engaged by each of the projecting portions 41 of the lock unit 40 is shifted upward or downward by one tooth (for instance, the projecting portion 41 of the lock unit 40 engaged with a recess portion 251 is engaged with a recess portion 252), the inclination angle of the windshield 19 is changed by 5 to 10 degrees. The alternate long and two short dashes line of Fig. 5 shows the state that the projecting portion 41 of the lock unit 40 engaged with the recess portion 251 is engaged with a recess portion 253 so that the inclination of the windshield 19 is changed from the minimum inclination angle to the maximum inclination angle. In this case, the windshield 19 can be angle-shifted by 15 to 30 degrees at a maximum. Here, when the minimum inclination angle of the windshield 19 is about 30 degrees, the inclination angle of the windshield 19 is changed by 30 to 60 degrees.

As shown in Fig. 6, the lock unit 40 has a body portion 401 extended in the right and left direction along the coupling member 60, ends 402 provided at the right and left ends of the body portion 401 and having the projecting portions 41, and an operating lever 43 extended rearward from the body portion 401. Supporting portions 403 supported by the upper pipe 102 are attached to the pair of right and left ends 402, respectively. The supporting portions 403 support the ends 402 so as to be rotated about axes parallel with the rotation support shafts 30. The ends 402, the lever 43, and the body portion 401 are integrally configured. The lever 43 and the projecting portions 41 are provided on the sides opposite each other in the front and rear direction with respect to the supporting portions 403. When the lever 43 is rotated, the projecting portions 41 are shifted with the rotation of the lever 43. The lock unit 40 is supported by the upper pipe 102. A bracket which supports the lock unit 40 is not required to be additionally provided, so that the number of components can be reduced. Likewise, the rotation support shafts 30 are fixed to the center stay 101 which supports the upper pipe 102. Brackets which fix the rotation support shafts 30 are not required to be additionally provided, so that the number of components can be reduced. In this way, the rotation support shafts 30 and the lock unit 40 are supported by the existing components, so that the number of components can be reduced. As described above, the projecting portions 41 are engaged with the recess portions 25 of the engaging portions 21 of the shield stays 20, and the projecting portions 41 are engaged with the recess portions 25, so that the shield stays 20 are fixed at the predetermined angle. In addition, as shown in Figs. 5 and 6, an urging unit 42 realized by springs are provided at the ends 402, respectively, and urge the projecting portions 41 in the direction engaging the projecting portions 41 with the recess portions 25 (in the front direction of the vehicle body). As a result, when the projecting portions 41 are engaged with the recess portions 25, the projecting portions 41 are not disengaged from the recess portions 25 unless an external force is applied. The lever 43 is extended rearward from the rear ends of the shield stays 20, and passes downward of the upper pipe 102. An end 431 of the lever 43 is located rearward of the meter body 51. When the driver presses down the end 431 of the lever 43 against the urging unit 42, the urging of the projecting portions 41 by the urging unit 42 is released, so that the projecting portions 41 can be disengaged from the recess portions 25. As a result, the fixing of the shield stays 20 is released, so that the shield stays 20 can be angle-shifted about the rotation support shafts 30.

In this way, the lock unit 40 has the lever 43 which becomes an operating portion manually operated to change between the locked state and the unlocked state, and the lever 43 is arranged in the position apart from the engaging portions 21 which are engaged with the angle shift of the shield stays 20. The lever 43 is arranged in the position in which the lever 43 is exposed from the meter cover 50. In this embodiment, the lever 43 is arranged downward of the meter cover 50 and the steering wheel 9, so that the lever 43 can be prevented from being noticeable.

Hereinafter, an operation of angle-shifting the shield stays 20 to adjust the inclination angle of the windshield 19 will be described.

The following operation of changing the windshield 19 in the state shown by the solid line of Fig. 5 to the windshield 19 shown by the alternate long and two short dashes line of Fig. 5, that is, of increasing the inclination angle of the windshield 19, is performed.

First, the end 431 of the lever 43 is pressed down to release the urging of the projecting portions 41 by the urging unit 42. Then, the projecting portions 41 are disengaged from the recess portions 251.

When the projecting portions 41 are disengaged from the recess portions 251, the shield stays 20 are rotatable about the rotation support shafts 30. The shield stays 20 are rotated forward about the rotation support shafts 30. As a result, the inclination angle of the shield stays 20 is increased, and according to that, the inclination angle of the windshield 19 attached to the shield stays 20 is increased.

According to the forward rotation of the shield stays 20, the engaging portions 21 are also rotated in an R direction about the rotation support shafts 30. As a result, the recess portions 25 formed by the teeth 211 provided to the engaging portions 21 are also rotated in the R direction about the rotation support shafts 30.

The urging unit 42 engage the projecting portions 41 with the recess portions 253 located downward of the recess portions 251. As a result, the shield stays 20 are fixed in the different angle shift position, so that the windshield 19 is fixed in the state that its inclination angle is increased.

When the inclination angle of the windshield 19 is decreased, the opposite operation of the above operation may be performed.

According to this embodiment, the following effects can be exhibited.
(1) The inclination angle of the windshield 19 is changed by the shield stays 20, the rotation support shafts 30, and the lock unit 40. The simplified windshield attaching structure can be provided. In addition, the rotation support shafts 30 and the lock unit 40 are covered by the meter cover 50. Appearance can be maintained satisfactory.

(2) The lever 43 is provided in the position apart from the engaging portions 21 of the shield stays 20 so as to be exposed from the meter cover 50. The position of the lever 43 can be arranged in the position in which the lever 43 can be easily operated by the driver. Even when the engaging portions 21 of the shield stays 20 are arranged in the position in which the engaging portions 21 are difficult to be reached by the driver, the operation of changing the shield stays 20 between the locked state and the unlocked state can be easily performed. In addition, the engaging portions 21 can be arranged in any position without considering the driver's operability. The engaging portions 21 can be easily arranged in the position in which the engaging portions 21 are covered by the meter cover 50. In this way, while part of the lock unit 40 is covered by the meter cover 50, the driver's operability of the lever 43 can be secured.

(3) The supporting portions 22 are arranged toward the shield attaching portions 23 from the engaging portions 21. The lock unit 40 can be prevented from being located on the track of the angle shift of the shield stays 20 with the supporting portions 22 as pivots, so that the interference between the lock unit 40 and the shield stays 20 can be prevented. In addition, the engaging portions 21 are arranged so as to be apart from the supporting portions 22. As compared with when the shield stays 20 are engaged near the supporting portions 22, the shield stays 20 are engaged apart from the supporting portions 22. The moment force for engaging the shield stays 20 can be larger to increase the engaging force of the lock unit 40.

(4) The lock unit 40 is arranged so as to engage the engaging portions 21 rearward of the supporting portions 22. Most of the lock unit 40 can be easily arranged rearward of the rotation support shafts 30. In this embodiment, the lock unit 40 is arranged rearward of the inner region of the front cowl 18 downward of the windshield 19. As compared with when the lock unit 40 is arranged forward of the inside of the front cowl 18, the lock unit 40 can be easily accommodated. The front cowl 18 of the motorcycle 1 is typically formed into a streamlined shape in which the outer shape vertical to the front and rear direction is increased from the front side toward the rear side. Therefore, in the inner region of the front cowl 18 downward of the windshield 19, the accommodating space in the up and down direction and in the right and left direction is larger on the rear side than on the front side. In this embodiment, as described above, most of the lock unit 40 is arranged rearward of the rotation support shafts 30. As compared with when the lock unit 40 is arranged forward of the rotation support shafts 30, the lock unit 40 can be arranged rearward of the front cowl 18 having a relatively large accommodating space. The lock unit 40 can be easily arranged so as to prevent the interference between the lock unit 40 and other components, so that the degree of freedom of the design can be improved.

(5) The lock unit 40 is arranged so as to be engaged with the engaging portions 21 downward of the supporting portions 22. Most of the lock unit 40 can be easily arranged downward of the rotation support shafts 30. In this way, the lock unit 40 is arranged downward of the rotation support shafts 30, so that part of the lock unit 40 can be easily covered by the meter cover 50. The lock unit 40 cannot be noticeable from the driver's seat, so that appearance can be improved. In addition, the rotation support shafts 30 and the front portion of the lock unit 40 are covered by the meter cover 50. The rotation support shafts 30 and the front portion of the lock unit 40 can be prevented from being exposed outward, so that appearance can be improved.

(6) The lock unit 40 is arranged rearward and downward of the supporting portions 22. The angle shift of the shield stays 20 with the supporting portions 22 as pivots cannot be inhibited by the lock unit 40. In addition, the engaging portions 21 are apart from the supporting portions 22. As compared with when the supporting portions 22 are engaged by the lock unit 40, the shield stays 20 are engaged apart from the supporting portions 22. The moment force for engaging the shield stays 20 can be larger to increase the engaging force of the lock unit 40.

(7) The shield stays 20 are supported by two right and left supporting portions 22, and are engaged by the lock unit 40 at two right and left engaging portions 21. The shield stays 20 can be stably supported. In addition, the distance between the engaging portions 21 is larger than the distance between the supporting portions 22. The shield stays 20 can be stably engaged.

(8) The supporting portions 22 are arranged near the pair of forwardmost shield attaching portions 23a. The angle shift of the shield stays 20 with the supporting portions 22 as pivots cannot be inhibited by the shield attaching portions 23.

(9) The engaging portions 21 have the plural teeth 211, and the projecting portions 41 of the lock unit 40 are engaged with the recess portions 25 formed by the teeth 211, so that the lock unit 40 locks the shield stays 20. The configuration in which the lock unit 40 locks the shield stays 20 at the predetermined angle can be easily provided.

(10) The position of the recess portions 25 engaged by the projecting portions 41 is changed to change the inclination angle of the shield stays 20. As compared with when a knob shown in Patent Document 1 is rotated, the inclination angle of the shield stays 20 can be changed more easily.

(11) The lock unit 40 has the urging unit 42 which urge the projecting portions 41 in the direction engaging the engaging portions 21, and the lever 43 which releases the urging. The unlock without operating the lever 43 can be prevented. In addition, the lock unit 40 has the urging unit 42, so that when the lever 43 is not operated, the projecting portions 41 can be held so as to be engaged with the engaging portions 21.

(12) The lever 43 is formed so as to be extended rearward of the shield stays 20, and the end 431 of the lever 43 is located rearward of the meter body. The driver can easily operate the lever 43, that is, the driver can easily release the urging of the urging unit 42.

(13) The coupling member 60 couples the outermost portions in the right and left direction of the right and left shield stays 20. The rigidity of the right and left shield stays 20 integrated with the coupling member 60 can be improved.

(14) The plurality of pairs of the shield attaching portions 23 are provided so as to be spaced from each other in the front and rear direction, and the interval in the right and left direction of the pair of forwardmost shield attaching portions 23a is shorter than the intervals in the right and left direction of other pairs of shield attaching portions 23. That is, the supporting interval of the windshield 19 is shorter on the front side of the vehicle body than on the rear side of the vehicle body. Since the windshield 19 receives wind from the front side of the vehicle body, with the above supporting intervals of the windshield 19, the shield stays 20 can stably support the windshield 19.

In this embodiment, the pair of right and left shield stays 20 are provided, and are coupled by the coupling member 60. However, the pair of right and left shield stays 20 are not required to be provided, and may be, for instance, integrated in the middle portion. Also in this case, the shield stays 20 preferably have the plurality of shield attaching portions 23. The plurality of pairs of right and left shield attaching portions 23 are preferably provided so as to be spaced from each other in the front and rear direction.

In this embodiment, the engaging portions 21 have the plural teeth 211, and the projecting portions 41 of the lock unit 40 are engaged with the recess portions 25 formed by the teeth 211. The inclination angle of the shield stays 20 is changed stepwise. However, the engaging portions 21 and the lock unit 40 may be configured so that the inclination angle of the shield stays 20 is continuously changed. For instance, the lock unit grips and fixes the rotated engaging portions 21. The inclination angle of the shield stays 20 can be continuously changed.

In addition, in this embodiment, the recess portions 25 are formed to the engaging portions 21 of the shield stays 20, and the projecting portions 41 are formed to the lock unit 40. Without being limited to this, the projecting portions may be formed to the engaging portions 21 of the shield stays 20, and the recess portions may be formed to the lock unit 40. In this way, the recess portions are formed to either the shield stays 20 or the lock unit 40, and the convex portions (projecting portions) are formed to the other. The shield stay 20 can be changed between the locked state and the unlocked state.

### (Second embodiment)

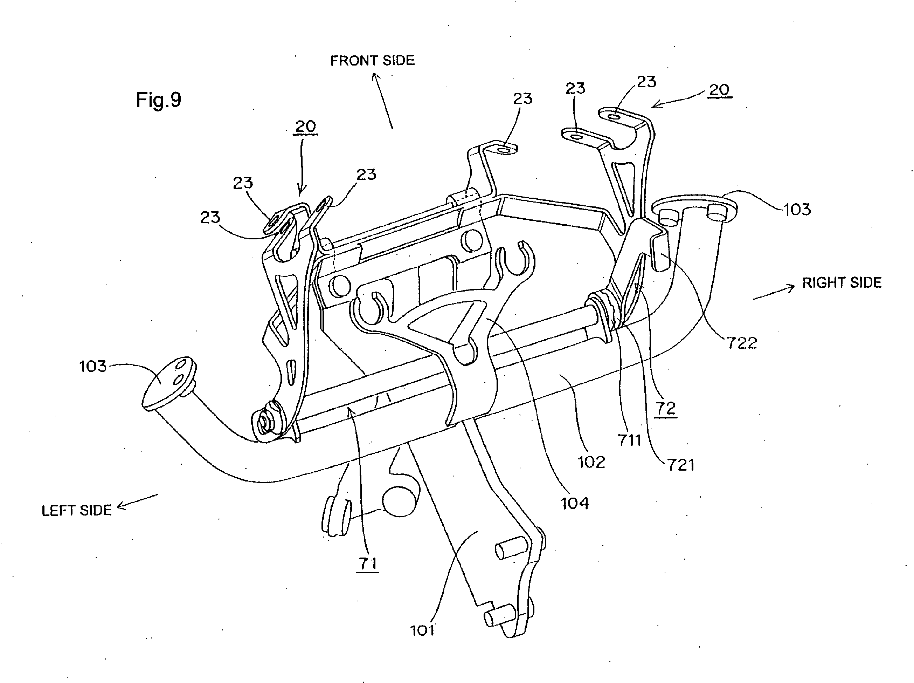

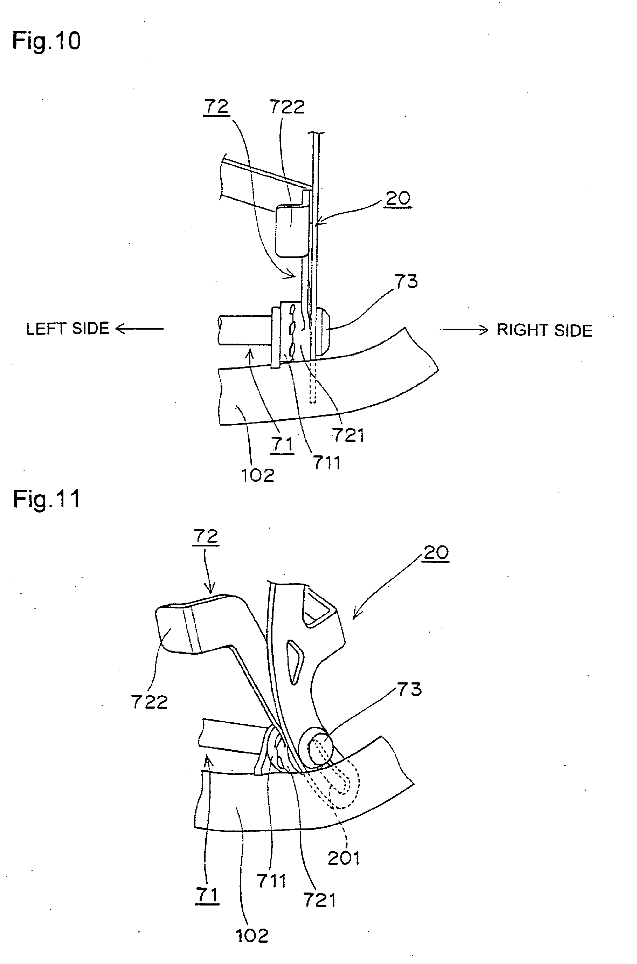

Fig. 9 is a rear perspective view of the windshield attaching structure according to a second embodiment of the present invention. Fig. 10 is a partially rear view of Fig. 9, and Fig. 11 is a partially rear perspective view of Fig. 9. This embodiment and the first embodiment are the same except that the configurations and arrangements of the rotation support shafts, the coupling member, and the lock unit are different. For this reason, in the description of this embodiment, the same components and portions as the first embodiment are indicated by the same reference numerals, and the detailed descriptions of their contents are omitted.

The pair of right and left shield stays 20 are coupled by a coupling member 71. The coupling member 71 is attached to the upper pipe 102. A cam portion 711 is provided at one end in the right and left direction (at the right end in this embodiment) of the coupling member 71. A rotating member 72 rotated about an axis of the coupling member 71 is arranged rightward and outward of the cam portion 711. A cam portion 721 of the rotating member 72 can be engaged with the cam portion 711. The rotating member 72 has a gripping portion 722 extended in the radius direction of the coupling member 71. The gripping portion 722 is rotated about an axis of the coupling member 71 to change the engaging state of the cam portion 711 and the cam portion 721, so that the distance in the right and left direction between the cam portion 711 and the cam portion 721 can be changed. Fig. 9 shows the state that the cam portion 711 and the cam portion 721 are completely engaged with each other and the distance in the right and left direction between the cam portion 711 and the cam portion 721 is minimum. On the other hand, Figs. 10 and 11 show the state that the rotating member 72 is rotated, the engagement of the cam portion 711 and the cam portion 721 is released, and the distance in the right and left direction between the cam portion 711 and the cam portion 721 is extended.

As shown in Fig. 10, the shield stay 20 is located rightward and outward of the cam portion 721, and a screw 73 fastens the shield stay 20 and the rotating member 72 to the coupling member 71 from the rightward and outward sides of the shield stay 20.

As shown in Fig. 11, a long hole 201 is formed in the fastening portion of the shield stay 20 by the screw 73. The position of the screw 73 in the long hole 201 is changed, so that the angle shift position of the shield stay 20 can be changed.

Hereinafter, an operation of angle-shifting the shield stays 20 to adjust the inclination angle of the windshield 19 will be described.

First, the gripping portion 722 of the rotating member 72 is rotated about an axis of the coupling member 71. As a result, the cam portion 721 is rotated about an axis of the coupling member 71. When the cam portion 721 is rotated, the cam portion 711 and the cam portion 721 are disengaged, so that the distance in the right and left direction between the cam portion 711 and the cam portion 721 is extended.

When the distance in the right and left direction between the cam portion 711 and the cam portion 721 is extended, the screw 73 is pressed rightward and outward, the screw 73 can be moved in the long hole 201 of the shield stay 20, and the shield stays 20 can be angle-shifted. Then, the position of the screw 73 in the long hole 201 is changed, so that the shield stays 20 are in the desired angle shift position. Thereafter, the rotating member 72 is rotated in the opposite direction of the first-time rotating direction. As a result, the engaged state of the cam portion 711 and the cam portion 721 is changed (the cam portion 711 and the cam portion 721 are brought into the completely engaged state), so that the distance in the right and left direction between the cam portion 711 and the cam portion 721 is shortened.

When the distance in the right and left direction between the cam portion 711 and the cam portion 721 is shortened, the screw 73 fastens the shield stays 20 to the coupling member 71. As a result, the shield stays 20 are fixed into the different angle shift portion, so that the windshield 19 is fixed in the state that its inclination angle is changed.

According to this embodiment, the following effects can be exhibited.

The inclination angle of the windshield 19 is changed by the shield stays 20, the coupling member 71, the rotating member 72, and the screw 73. The simplified windshield attaching structure can be provided. In addition, the coupling member 71, the rotating member 72, and the screw 73 are covered by the meter cover 50. Appearance can be maintained satisfactory

The long hole 201 is formed in the fastening portion of the shield stay 20 by the screw 73. The screw 73 can be continuously moved in the long hole 201, so that the shield stays 20 can be continuously angle-shifted.

### (Third embodiment)

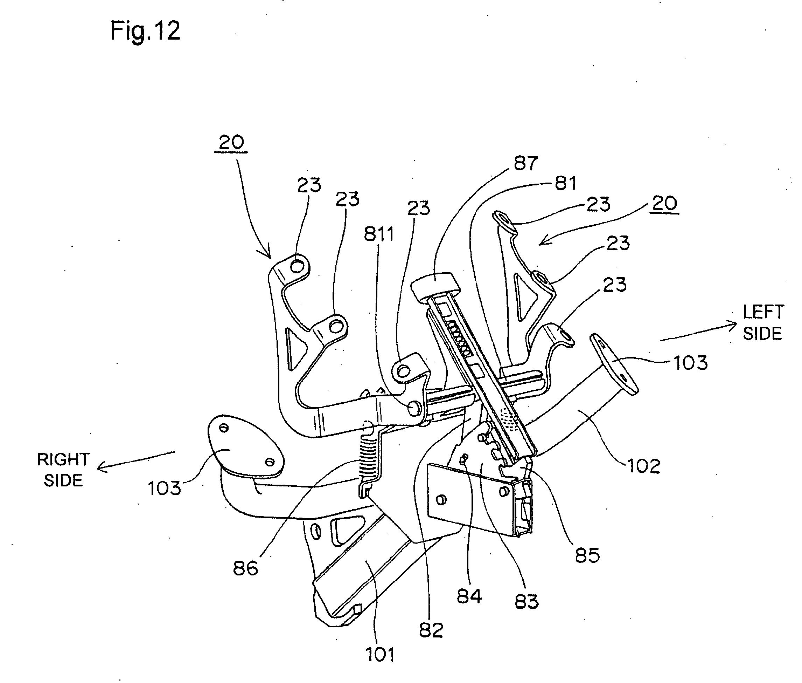

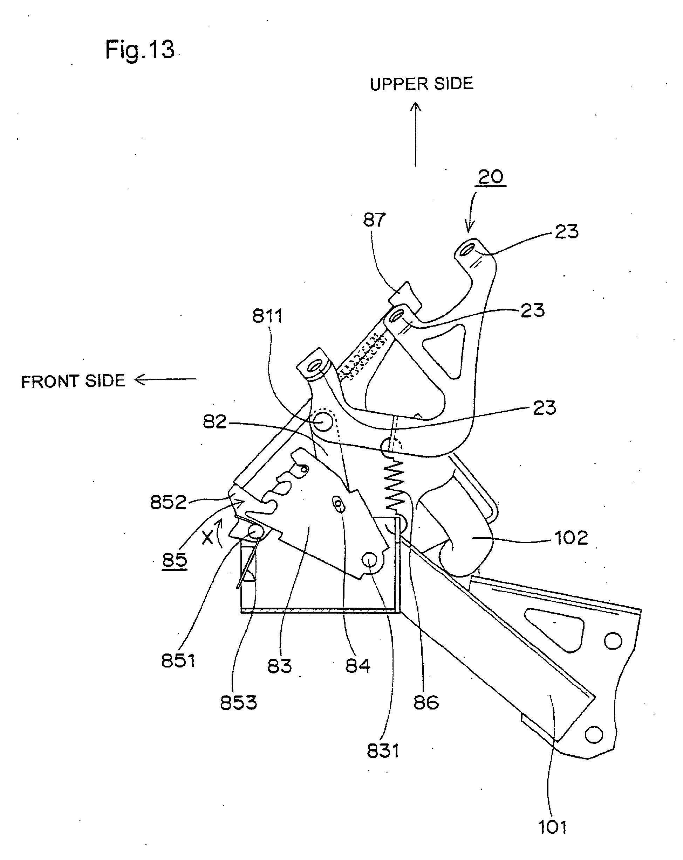

Fig. 12 is a front perspective view of the windshield attaching structure according to a third embodiment of the present invention, and Fig. 13 is a left side view of Fig. 12. This embodiment and the first embodiment are the same except that the configurations and arrangements of the rotation support shafts, the coupling member, and the lock unit are different. For this reason, in the description of this embodiment, the same components and portions as the first embodiment are indicated by the same reference numerals, and the detailed descriptions of their contents are omitted.

The pair of right and left shield stays 20 are coupled by a coupling member 81. The coupling member 81 is coupled to a first engaging member 83 at a pivot 84 via an arm 82. The first engaging member 83 can be rotated with respect to the center stay 101 about a pivot 831. The first engaging member 83 can be engaged with a second engaging member 85. The second engaging member 85 can be rotated with respect to the center stay 101 about a pivot 851. When the first engaging member 83 and the second engaging member 85 are engaged, they are fixed each other to the center stay 101, so that the angle shift position of the shield stays 20 is also fixed. To stably hold the shield stays 20, the pair of right and left shield stays 20 are coupled to the center stay 101 by resilient members 86 provided one on each of the right and left sides.

A pressing member 87 has a lower end which can press down a front end 852 of the second engaging member 85. In addition, an urging member 853 urges the second engaging member 85 in an X direction to reinforce the engagement of the first engaging member 83 and the second engaging member 85. When the front end 852 is pressed down by the pressing member 87, the second engaging member 85 is rotated in the opposite direction of the X direction about the pivot 851 against the urging of the resilient members 853. When the second engaging member 85 is rotated in the opposite direction of the X direction about the pivot 851, the first engaging member 83 and the second engaging member 85 are disengaged from each other.

Hereinafter, an operation of angle-shifting the shield stays 20 to adjust the inclination angle of the windshield 19 will be described.

First, the pressing member 87 is pressed down to rotate the second engaging member 85 in the opposite direction of the X direction about the pivot 851 against the urging force of the urging member 853. When the second engaging member 85 is rotated in the opposite direction of the X direction, the first engaging member 83 and the second engaging member 85 are disengaged from each other.

When the first engaging member 83 and the second engaging member 85 are disengaged from each other, the first engaging member 83 can be rotated about the pivot 831. The first engaging member 83 and the shield stays 20 are coupled at a pivot 84 and a pivot 811 via the arm 82, so that the first engaging member 83 is rotated about the pivot 831 to angle-shift the shield stays 20. As a result, the inclination angle of the windshield 19 attached to the shield stays 20 is changed.

When the inclination angle of the windshield 19 is determined, the pressing member 87 is pulled up. The pressing of the second engaging member 85 by the pressing member 87 is released, the second engaging member 85 is rotated in the X direction about the pivot 851 by the urging member 853, and is engaged with the first engaging member 83. Then, the first engaging member 83 is fixed to the center stay 101. As a result, the shield stays 20 are fixed in the different angle shift position, so that the windshield 19 is fixed in the state that its inclination angle is changed.

According to this embodiment, the following effects can be exhibited.

The inclination angle of the windshield 19 is changed by the coupling member 81, the arm 82, the first engaging member 83, the second engaging member 85, and the pressing member 87. The simplified windshield attaching structure can be provided. In addition, the coupling member 81, the arm 82, the first engaging member 83, and the second engaging member 85 are covered by the meter cover 50. Appearance can be held satisfactory.

The first engaging member 83 is rotated about the pivot 831 to angle-shift the shield stays 20. The rotation angle of the first engaging member 83 about the pivot 831 can be continuously changed, so that the shield stays 20 can be continuously angle-shifted.

### (Fourth embodiment)

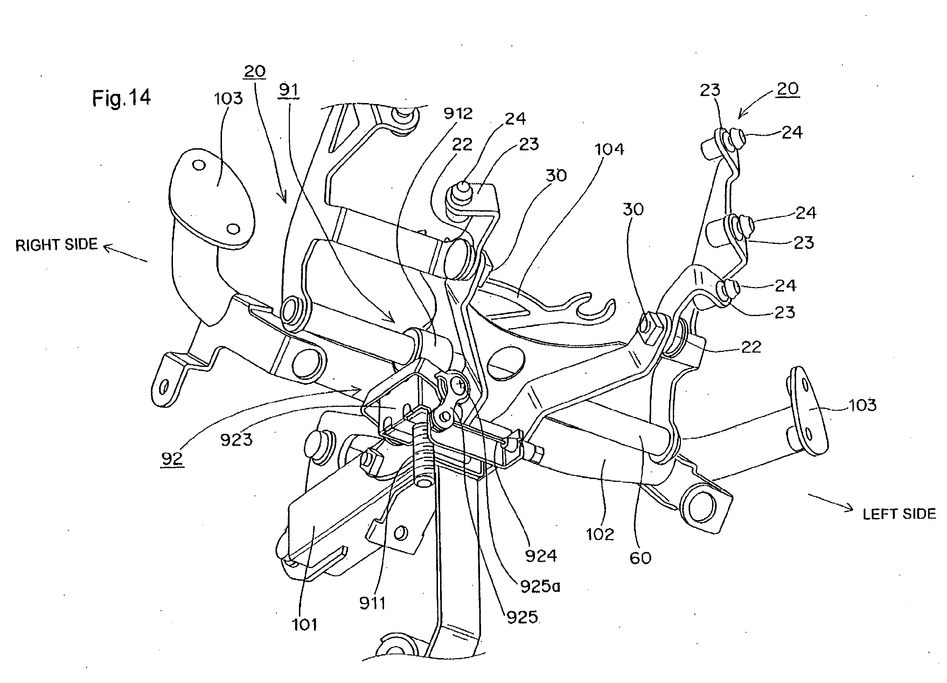

Fig. 14 is a front perspective view of the windshield attaching structure according to a fourth embodiment of the present invention. This embodiment and the first embodiment are the same except that the configurations and arrangements of the coupling member and the lock unit are different. For this reason, in the description of this embodiment, the same components and portions as the first embodiment are indicated by the same reference numerals, and the detailed descriptions of their contents are omitted.

The pair of right and left shield stays 20 are coupled by the coupling member 60. A bolt 91 having a ring-like head is attached to the coupling member 60. A screw portion 911 of the bolt 91 is gripped by a gripping member 92 from the right and left sides. The gripping member 92 is attached to the center stay 101. The position in the up and down direction of the screw portion 911 gripped by the gripping member 92 is changed, so that the bolt 91 is moved up and down with respect to the center stay 101. When the bolt 91 is moved up and down with respect to the center stay 101, the coupling member 60 gripped by a ring portion 912 of the bolt 91 is moved up and down with respect to the center stay 101. The shield stays 20 are angle-shifted with respect to the center stay 101 about the rotation support shafts 30.

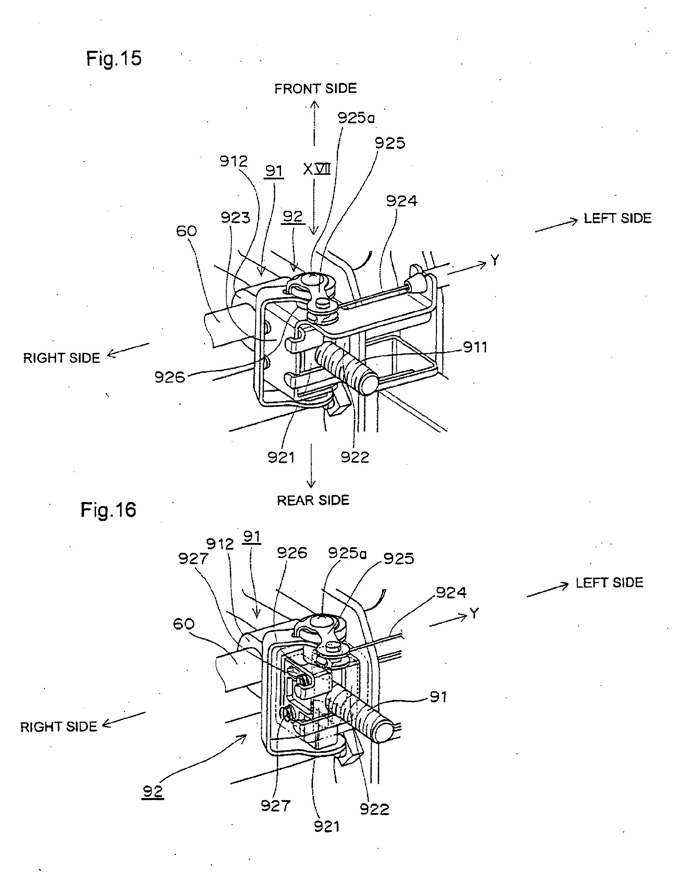

Fig. 15 is a lower perspective view of the gripping member 92 portion of Fig. 14. The gripping member 92 has a gripping portion 921 and a gripping portion 922 which grip the screw portion 911 of the bolt 91 from the right and left sides. The gripping portion 921 and the gripping portion 922 are covered by a cover 923. Fig. 16 is a diagram showing the gripping member 92 of Fig. 15 from which the cover 923 is detached. The gripping portion 921 and the gripping portion 922 are urged by an urging member 927 in the direction gripping the screw portion 911.

The gripping member 92 has a pulley member 925 which can change the interval of the gap between the gripping portion 921 and the gripping portion 922. A wire 924 is wound around the pulley member 925. An eccentric member 926 is provided in the position rearward of the pulley member 925 and sandwiched between the gripping portion 921 and the gripping portion 922. The wire 924 is pulled in a Y direction, so that the eccentric member 926 can be rotated about a pivot 925a of the pulley member 925. The eccentric member 926 has a substantially elliptical shape having a short axis and a long axis in front view.

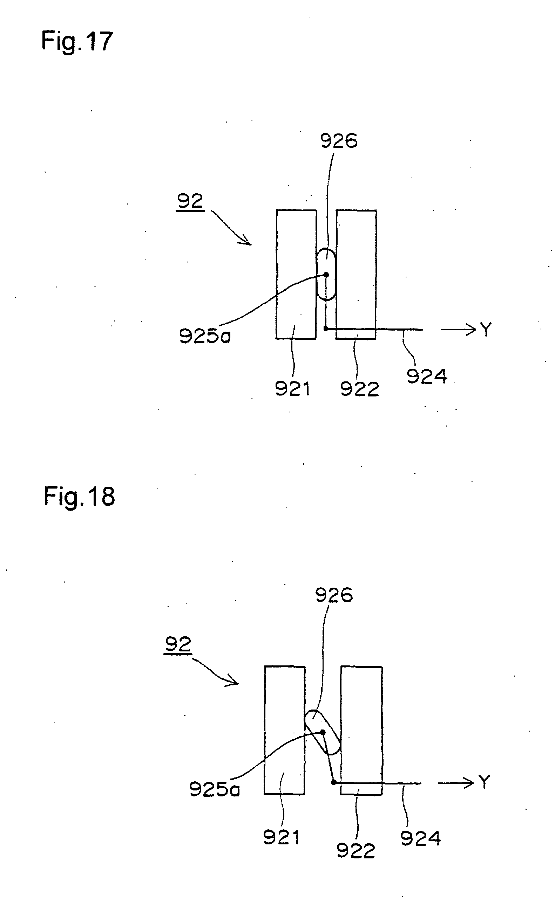

Fig. 17 is a schematic diagram of the gripping member 92 of Fig. 15 in the state that the pulley member 925 is removed, viewed in the direction of an arrow XVII. Fig. 18 is a diagram showing the state that the eccentric member 926 of Fig. 17 is rotated about the pivot 925a. As shown in Fig. 17, in the state that the gripping portion 921 and the gripping portion 922 grip the screw portion 911, the short axis portion of the eccentric member 926 is sandwiched between the gripping portion 921 and the gripping portion 922. Here, when the wire 924 is pulled in the Y direction, as shown in Fig. 18, the eccentric member 926 is rotated about the pivot 925a, so that the longer portion than the short axis portion of the eccentric member 926 is sandwiched between the gripping portion 921 and the gripping portion 922. As a result, the gap between the gripping portion 921 and the gripping portion 922 is extended against the urging of the urging member 927, so that the gripped state of the screw portion 911 by the gripping portion 921 and the gripping portion 922 is released.

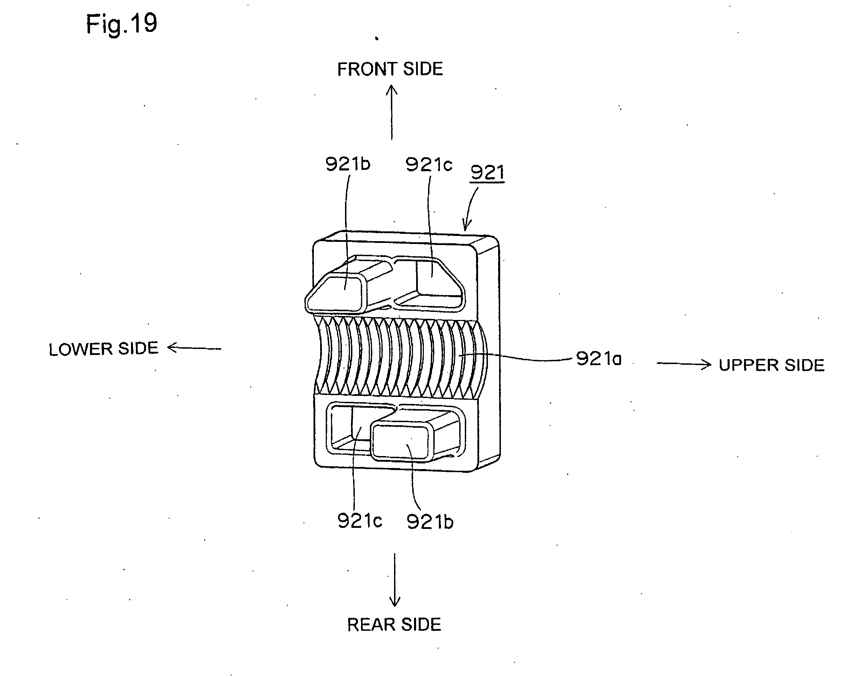

Fig. 19 is a perspective view of the gripping portion 921. Since the gripping portion 922 has the same configuration as that of the gripping portion 921, the gripping portion 921 will be described as an example. The gripping portion 921 has a female screw portion 921a engaged with the screw portion 911 formed with a male screw, and convex portions 921b and hole portions 921c engaged with the gripping portion 922. The convex portions 921b and the hole portions 921c are provided one on each of the front and rear sides of the female screw portion 921a, and are staggered with respect to each other in the front and rear direction of the female screw portion 921a. The screw portion 911 is formed with a male screw and the female screw portion 921a is formed with a female screw, so that the gripping portion 921 can substantially continuously (at a thread pitch) change the gripping position of the screw portion 911 in the axis direction (that is, in the up and down direction) of the screw portion 911. In addition, the convex portions 921b of the gripping portion 921 are engaged with the hole portions of the gripping portion 922, and the convex portions of the gripping portion 922 are engaged with the hole portion 921c of the gripping portion 921. In the engagement of the gripping portion 921 and the gripping portion 922, the positioning of the gripping portion 921 and the gripping portion 922 can be easily performed.

Hereinafter, an operation of angle-shifting the shield stays 20 to adjust the inclination angle of the windshield 19 will be described.

First, the wire 924 is pulled in the Y direction to rotate the eccentric member 926 about the pivot 925a. By the rotation of the eccentric member 926 against the urging of the urging member 927, the gap between the gripping portion 921 and the gripping portion 922 which grip the screw portion 911 of the bolt 91 is increased to release the gripped state of the screw portion 911.

When the gripped state of the screw portion 911 is released, the bolt 91 can be moved in the up and down direction to move the bolt 91 in the up and down direction. By the movement of the bolt 91 in the up and down direction, the coupling member 60 is moved up and down with respect to the center stay 101. As a result, the shield stays 20 are angle-shifted with respect to the center stay 101 about the rotation support shafts 30, and according to that, the inclination angle of the windshield 19 attached to the shield stays 20 is changed.

When the tension of the wire 924 is released in the state that the position in the up and down direction of the bolt 91 is changed, the urging force of the urging member 927 is exerted to rotate the eccentric member 926 about the pivot 925a, so that its short axis portion is sandwiched between the gripping portion 921 and the gripping portion 922. Then, the gap between the gripping portion 921 and the gripping portion 922 is decreased, so that the screw portion 911 is gripped by the gripping portion 921 and the gripping portion 922 to fix the position of the bolt 91. As a result, the shield stays 20 are fixed in the different angle shift position, so that the windshield 19 is fixed in the state that its inclination angle is changed.

According to this embodiment, the following effects can be exhibited.

The inclination angle of the windshield 19 is changed by the shield stays 20, the coupling member 60, the bolt 91, and the gripping member 92. The simplified windshield attaching structure can be provided. In addition, the coupling member 60, the bolt 91, and the gripping member 92 are covered by the meter cover 50. Appearance can be held satisfactory.

The up and down position of the bolt 91 is changed to angle-shift the shield stays 20. The gripped position of the bolt 91 by the gripping member 92 can be changed substantially continuously in the up and down direction, so that the shield stays 20 can be continuously angle-shifted.

In the first to the fourth embodiments, the cover member which covers the rotation support shafts 30, the coupling member 60, the lock unit 40 and the like is the meter cover 50. The cover member is not limited to the meter cover 50, and may be the cover member arranged in the front portion of the vehicle body, e.g., the front cowl 18. Such cover member is formed into a non-transparent shape, so that the lock unit 40 and the like can be prevented from being noticeable. In addition, the cover member preferably covers at least the front portion of the lock unit 40 and the like. In the above embodiments, the meter cover 50 arranged rearward of the end of the windshield 19 and forward of the steering wheel 9 covers the lock unit 40 and the like. The present invention is not limited to this. Part of the lock unit 40 and the like may be covered by the forward-arranged member other than the meter cover arranged forward of the viewpoint of the driver. Even in a vehicle in which the front cowl 18 and the meter cover 50 are not provided, the meter body 51 may cover, as the forward-arranged member, the lock unit 40 and the like. In this case, the lock unit 40 and the like is arranged in the region forward of the meter body, preferably, in the region forward and downward thereof, more preferably, in the region on the opposite side of the visibility of the meter body 51 with respect to the visibility direction connecting the viewpoint of the driver and the meter body 51. Likewise, at least part of the lock unit 40 and the like is preferably arranged in the region forward and downward of the steering wheel 9 and the upper bracket 5. Thus, in the present invention, at least part of the lock unit 40 is covered by the forward-arranged member. When the driver riding in the vehicle sees the front, at least part of the lock unit 40 is covered by the forward-arranged member to simplify the front portion of the vehicle body so that appearance can be improved.

In addition, in the above embodiments, the lever 43 and the like is used as the operating portion which changes the shield stays 20 between the locked state and the unlocked state. However, when there is a power transmission mechanism which provides power for changing the locked state in the position apart from the engaging portions 21, it may be used as the operating portion. For instance, the operating portion and the engaging portions 21 are spaced from each other, and using a typical mechanism such as a gear and a belt, power may be transmitted from the operating portion to the engaging portions 21. In addition, electric power may be used as power for the change between the locked state and the unlocked state, and a switch for providing an electric power instruction may be used as the operating portion. For instance, an electromagnetic solenoid may be used as the lock unit.

In the above embodiments, the present invention has been described using the motorcycle. Other than the motorcycle, all vehicles having a windshield forward of a driver are applicable. For instance, the present invention can be suitably used for saddle type vehicles such as small planing boats, buggy vehicles, and all-terrain vehicles. Further, the present invention is suitably applicable to vehicles having a windshield forward of the handlebar of a vehicle. In that case, part of the lock unit and the rotation support shafts are arranged forward and downward of the handlebar. Part of the lock unit and the rotation support shafts are hidden from the visibility of the driver, so that appearance can be improved.

The present invention is not limited to the configurations described in the above embodiments and can include various modification examples which can be contemplated by those skilled in the art without departing from the contents described in the claims.

In the present invention, since the windshield attaching structure which can change the inclination angle of the windshield to simplify the front portion of the vehicle body so that appearance can be improved can be provided, the industrial utilization value is high.

## Claims

1. A windshield attaching structure for a windshield (19) which is provided in the upper portion of the front portion of the vehicle body of a vehicle and reduces wind pressure to a driver, the windshield attaching structure comprising:
a pair of right and left shield stays (20, 20) to which a windshield (19) is attachable,
a rotation support shaft (30) which supports the pair of right and left shield stays (20, 20) so as to be angle-shifted to a frame (10) of the vehicle; and
a lock unit (40) which can change the pair of right and left shield stays (20, 20) between a locked state in which the pair of right and left shield stays (20, 20) is locked in any one of a plurality of angle shift positions and an unlocked state in which the pair of right and left shield stays (20, 20) is not locked in any of the angle shift positions,
wherein each of the shield stays (20, 20) has an engaging portion (21), a supporting portion (22) and at least one shield attaching portion (23), and
wherein at least part of the lock unit (40) is covered by a forward-arranged member (50) arranged in the front portion of the vehicle,
wherein the lock unit (40) has an operating portion (43) which is manually operated to change the shield stays (20, 20) between the locked state and the unlocked state,
wherein the operating portion (43) is arranged in a position apart from the engaging portions (21, 21) of the pair of right and left shield stays (20, 20) engaged by the lock unit (40) so as to be exposed from the forward-arranged member (50),
wherein the supporting portions (22, 22) of each shield stay (20, 20) are supported by the rotation support shaft (30) and the shield attaching portions (23, 23) are fixable to a windshield (19),
wherein the supporting portions (22, 22) of each shield stay (20, 20) are arranged toward the shield attaching portions (23, 23) from the engaging portions (21, 21),
**characterized in that**
the distance (L4) in the right and left direction between the right and left engaging portions (21, 21) is set to be larger than the distance (L5) in the right and left direction between the right and left supporting portions (22, 22).

2. The windshield attaching structure according to claim 1, wherein the lock unit (40) locks the engaging portion (21) of each shield stay rearward of the supporting portion (22).

3. The windshield attaching structure according to claim 1 or 2, wherein the lock unit (40) locks the engaging portion (21) of each shield stay downward of the supporting portion (22).

4. The windshield attaching structure according to any one of claims 1 to 3, wherein the front portion of the lock unit (40) and the rotation support shaft (30) are covered by the forward-arranged member.

5. The windshield attaching structure according to any one of claims 1 to 3,
wherein each shield stay (20) has a plurality of shield attaching portions (23) are provided so as to be spaced from each other in the front and rear direction, and
wherein the supporting portion (22) of each shield stay is arranged near the forwardmost shield attaching portion (23).

6. The windshield attaching structure according to any one of claims 1 to 3 and 5,
wherein the engaging portion (21) of each shield stay has a plurality of teeth (211) for angle shift positioning,
wherein the lock unit (40) has a projecting portion (41) which can be shifted between a locked position and an unlocked position,
wherein the projecting portion (41) is shifted into the locked position so as to be engaged with one of recess portions (25) formed by the teeth of the engaging portion so that the lock unit (40) locks the shield stay (20) into the predetermined angle shift position, and
wherein the projecting portion (41) is shifted into the unlocked position to disengage the projecting portion (41) and the engaging portion (21) from each other so that the lock unit (40) unlocks the shield stay (20).

7. The windshield attaching structure according to claim 6,
wherein the lock unit (40) has an urging unit (42) which urges the projecting portion (41) in the direction engaging the engaging portion (21) of each shield stay, and an operating lever (43) which releases the urging against the urging unit (42).

## Patentansprüche

1. Frontscheibenbefestigungsstruktur für eine Frontscheibe (19), die im oberen Abschnitt des vorderen Abschnitts der Fahrzeugkarosserie eines Fahrzeuges vorgesehen ist und den Winddruck auf einen Fahrer reduziert, wobei die Frontscheibenbefestigungsstruktur aufweist:
ein Paar rechter und linker Scheibenständer (20, 20), an welchen eine Frontscheibe (19) befestigbar ist,
einen Rotationsabstützschaft (30), der das Paar der rechten und linken Scheibenständer (20, 20) abstützt, um zu einem Rahmen (10) des Fahrzeuges winkelversetzt zu sein; und
eine Verriegelungseinheit (40), die das Paar der rechten und linken Scheibenständer (20, 20) zwischen einem verriegelten Zustand, in dem das Paar aus dem rechten und linken Scheibenständer (20, 20) in einer Vielzahl an Winkelversatzpositionen verriegelt ist, und einem entriegelten Zustand, in dem das Paar aus dem rechten und linken Scheibenständer (20, 20) in keiner der Winkelversatzpositionen verriegelt ist, verändern kann,
wobei jeder der Scheibenständer (20, 20) einen Eingriffsabschnitt (21), einen Abstützabschnitt (22) und zumindest einen Scheibenbefestigungsabschnitt (23) aufweist, und
wobei zumindest ein Abschnitt der Verriegelungseinheit (40) durch ein vorne angeordnetes Element (50), das in dem vorderen Abschnitt des Fahrzeuges angeordnet ist, bedeckt ist,
wobei die Verriegelungseinheit (40) einen Betriebsabschnitt (43) aufweist, der manuell betätigt wird, um die Scheibenständer (20, 20) zwischen dem verriegelten Zustand und dem entriegelten Zustand zu verändern,
wobei der Betriebsabschnitt (43) an einer Position entfernt von den Eingriffsabschnitten (21, 21) des Paars aus dem rechten und linken Scheibenständer (20, 20), das mit der Verriegelungseinheit (40) in Eingriff steht, angeordnet ist, um von dem vorne angeordneten Element (50) exponiert zu sein,
wobei die Abstützabschnitte (22, 22) von jedem Scheibenständer (20, 20) von der Rotationsabstützhülle (30) abgestützt werden und die Scheibenbefestigungsabschnitte an einer Frontscheibe (19) befestigbar sind,
wobei die Abstützabschnitte (22, 22) von jedem Scheibenständer (20, 20) in Richtung der Scheibenbefestigungsabschnitte (23, 23) der Eingriffsabschnitte (21, 21) angeordnet sind,
**dadurch gekennzeichnet, dass** der Abstand (L4) in der Richtung von rechts nach links zwischen den rechten und linken Eingriffsabschnitten (21, 21) eingestellt ist, um größer zu sein als der Abstand (L5) in der Richtung von rechts nach links zwischen den rechten und linken Abstützabschnitten (22, 22).

2. Frontscheibenbefestigungsstruktur nach Anspruch 1, bei der die Verriegelungseinheit (40) den Eingriffsabschnitt (21) von jedem Scheibenständer hinter dem Verriegelungsabschnitt (22) verriegelt.

3. Frontscheibenbefestigungsstruktur nach Anspruch 1 oder 2, bei der die Verriegelungseinheit (40) den Eingriffsabschnitt (21) von jedem Scheibenständer unterhalb des Abstützabschnitts (22) verriegelt.

4. Frontscheibenbefestigungsstruktur nach einem der Ansprüche 1 bis 3, bei der der vordere Abschnitt der Verriegelungseinheit (40) und die Rotationsabschnittswelle (30) von dem vorne angeordneten Element bedeckt sind.

5. Frontscheibenbefestigungsstruktur nach einem der Ansprüche 1 bis 3, bei der jeder Scheibenständer (20) eine Vielzahl an Scheibenbefestigungsabschnitten (23) aufweist, die vorgesehen sind, um voneinander in der Richtung von vorne nach hinten beabstandet zu sein, und
wobei der Abstützabschnitt (22) von jedem Scheibenständer in der Nähe des vordersten Scheibenbefestigungsabschnitts (23) angeordnet ist.

6. Frontscheibenbefestigungsstruktur nach einem der Ansprüche 1 bis 3 und 5,
bei der der Eingriffsabschnitt (21) von jedem Scheibenständer eine Vielzahl an Zähnen (211) zur Winkelversatzpositionierung aufweist,
wobei die Verriegelungseinheit (40) einen vorstehenden Abschnitt (41) aufweist, der zwischen einer verriegelten Position und einer entriegelten Position versetzt werden kann,
wobei der vorstehende Abschnitt (41) in die verriegelte Position versetzt wird, um in Eingriff mit einem der Ausnehmungsabschnitte (25) zu stehen, die durch die Zähne des Eingriffsabschnitts ausgebildet werden, sodass die Verriegelungseinheit (40) den Scheibenständer (20) in der vorgegebenen Winkelversatzposition verriegelt, und
wobei der vorstehende Abschnitt (41) in die entriegelte Position versetzt wird, um den vorstehenden Abschnitt (41) und den Eingriffsabschnitt (21) auseinander auszurücken, sodass die Verriegelungseinheit (40) den Scheibenständer (20) entriegelt.

7. Frontscheibenbefestigungsstruktur nach Anspruch 6, bei der die Verriegelungseinheit (40) eine Drängeinheit (42), die den vorstehenden Abschnitt (41) in der Richtung des Einrückens des Eingriffsabschnitts (21) von jedem Scheibenständer drängt, und einen Betätigungshebel, der das Drängen gegen die Drängeinheit (42) löst, aufweist.

## Revendications

1. Structure de fixation de pare-brise pour un pare-brise (19) qui est prévu dans la partie supérieure de la partie avant du corps de véhicule d'un véhicule et réduit la pression du vent sur un conducteur, la structure de fixation de pare-brise comprenant :
une paire de supports droit et gauche de pare-brise (20, 20) sur lesquels un pare-brise (19) peut être fixé,
un arbre de support de rotation (30) qui supporte la paire de supports droit et gauche de pare-brise (20, 20) afin d'être décalé de manière angulaire vers un châssis (10) du véhicule ; et
une unité de blocage (40) qui peut faire passer la paire de supports droit et gauche de pare-brise (20, 20) d'un état bloqué dans lequel la paire de supports droit et gauche de pare-brise (20, 20) est bloquée dans l'une quelconque d'une pluralité de positions de déplacement angulaire à un état débloqué dans lequel la paire de supports droit et gauche de pare-brise (20, 20) n'est pas bloquée dans l'une quelconque des positions de déplacement angulaire,
dans laquelle chacun des supports de pare-brise (20, 20) a une partie de mise en prise (21), une partie de support (22) et au moins une partie de fixation de pare-brise (23), et
dans laquelle au moins une partie de l'unité de blocage (40) est recouverte par un élément agencé vers l'avant (50) agencé dans la partie avant du véhicule,
dans laquelle l'unité de blocage (40) a une partie de commande (43) qui est actionnée manuellement pour faire passer les supports de pare-brise (20, 20) de l'état bloqué à l'état débloqué,
dans laquelle la partie de commande (43) est agencée dans une position à distance des parties de mise en prise (21, 21) de la paire de supports droit et gauche de pare-brise (20, 20) mis en prise par l'unité de blocage (40) afin d'être exposée par rapport à l'élément agencé vers l'avant (50),
dans laquelle les parties de support (22, 22) de chaque support de pare-brise (20, 20) sont supportées par l'arbre de support de rotation (30) et les parties de fixation de pare-brise (23, 23) peuvent être fixées sur un pare-brise (19),
dans laquelle les parties de support (22, 22) de chaque support de pare-brise (20, 20) sont agencées vers les parties de fixation de pare-brise (23, 23) à partir des parties de mise en prise (21, 21),
**caractérisée en ce que** :
la distance (L4) dans les directions droite et gauche entre les parties de mise en prise droite et gauche (21, 21) est agencée pour être supérieure à la distance (L5) dans la direction droite et gauche entre les parties de support droite et gauche (22, 22).

2. Structure de fixation de pare-brise selon la revendication 1, dans laquelle l'unité de blocage (40) bloque la partie de mise en prise (21) de chaque support de pare-brise vers l'arrière de la partie de support (22).

3. Structure de fixation de pare-brise selon la revendication 1 ou 2, dans laquelle l'unité de blocage (40) bloque la partie de mise en prise (21) de chaque support de pare-brise vers le bas de la partie de support (22).

4. Structure de fixation de pare-brise selon l'une quelconque des revendications 1 à 3, dans laquelle la partie avant de l'unité de blocage (40) et l'arbre de support de rotation (30) sont recouverts par l'élément agencé vers l'avant.

5. Structure de fixation de pare-brise selon l'une quelconque des revendications 1 à 3,
dans laquelle chaque support de pare-brise (20) a une pluralité de parties de fixation de pare-brise (23) qui sont prévues pour être espacées les unes des autres dans la direction avant et arrière, et
dans laquelle la partie de support (22) de chaque support de pare-brise est agencée à proximité de la partie de fixation de pare-brise (23) la plus en avant.

6. Structure de fixation de pare-brise selon l'une quelconque des revendications 1 à 3 et 5,
dans laquelle la partie de mise en prise (21 ) de chaque support de pare-brise a une pluralité de dents (211) pour le positionnement du déplacement angulaire,
dans laquelle l'unité de blocage (40) a une partie en saillie (41) qui peut être déplacée entre une position bloquée et une position débloquée,
dans laquelle la partie en saillie (41) est déplacée dans la position bloquée afin d'être mise en prise avec l'une des parties formant évidement (25) formées par les dents de la partie de mise en prise de sorte que l'unité de blocage (40) bloque le support de pare-brise (20) dans la position de déplacement angulaire prédéterminée, et
dans laquelle la partie en saillie (41) est déplacée dans la position débloquée pour dégager la partie en saillie (41) et la partie de mise en prise (21) l'une de l'autre de sorte que l'unité de blocage (40) débloque le support de pare-brise (20).

7. Structure de fixation de pare-brise selon la revendication 6,
dans laquelle l'unité de blocage (40) a une unité de poussée (42) qui pousse la partie en saillie (41) dans la direction mettant en prise la partie de mise en prise (21) de chaque support de pare-brise, et un levier de commande (43) qui libère la poussée contre l'unité de poussée (42).
